# EUROPÄISCHE PATENTSCHRIFT

(11) **EP 4 045 726 B1**
(45) Veröffentlichungstag und Bekanntmachung des Hinweises auf die Patenterteilung: **02.12.2026**
(21) Anmeldenummer: 20789890.9
(22) Anmeldetag: 02.10.2020
(51) Int. Cl.: E04B 1/68

(54) **DICHTBAND ZUM ABDICHTEN VON BAUWERKSFUGEN**
SEALING STRIP FOR SEALING STRUCTURAL JOINTS
BANDE D'ÉTANCHÉITÉ POUR ÉTANCHÉIFIER DES JOINTS DE STRUCTURE

(30) Priorität: 15.10.2019 DE 102019127665
(43) Veröffentlichungstag der Anmeldung: 24.08.2022
(73) Patentinhaber: Tremco CPG Germany GmbH, 92439 Bodenwöhr (DE)
(72) Erfinder: HÜBSCHMANN, Martin, 92546 Schmidgaden (DE); KOMMA, Markus, 93133 Burglengenfeld (DE)
(74) Vertreter: Hannke Bittner & Partner mbB Regensburg
(86) Internationale Anmeldenummer: PCT/EP2020/077760
(87) Internationale Veröffentlichungsnummer: WO 2021/073906

(56) Entgegenhaltungen:
- EP-A1- 2 107 176
- EP-A1- 2 679 738

## Beschreibung

Die vorliegende Erfindung bezieht sich auf ein Dichtband insbesondere zum Abdichten von Bauwerksfugen. Derartige Dichtbänder oder auch Dichtstreifen sind aus dem Stand der Technik seit Langem bekannt. Diese werden dabei beispielsweise in die Fugen zwischen Fenster und Mauerwerk oder auch zwischen Laibungen eingebracht. Problematisch ist hierbei, dass teilweise noch ein gewisser Durchlass von Luft in Richtung der jeweiligen Gebäudefuge bzw. des Gebäudespaltes möglich ist.

Daher sind aus dem Stand der Technik Dichtbänder bekannt, die an den Außenoberflächen oder in ihrem Inneren Abdichtfolien oder dergleichen aufweisen. Die Herstellung derartiger Dichtbänder ist im Stand der Technik teilweise relativ komplex. So werden beispielsweise Schaumstoffträger eingeschnitten und in die jeweiligen Schnitte Folien eingebracht.

Das Dokument EP 2 679 738 A1 zeigt ein als Dichtbandrolle konfektioniertes Dichtband gemäss dem Oberbegriff des Anspruchs 1.

Der vorliegenden Erfindung liegt daher die Aufgabe zugrunde, ein vereinfachtes Dichtband zur Verfügung zu stellen, welches insbesondere auch in der Herstellung geringere Probleme bereitet bzw. mit geringerem Aufwand herstellbar ist. Dies wird erfindungsgemäß durch ein als Dichtbandrolle konfektioniertes Dichtband nach dem unabhängigen Anspruch 1 und im Verfahren zum Herstellen einer entsprechenden Dichtbandrolle gemäß dem unabhängigen Anspruch 9 erreicht. Vorteilhafte Ausführungsformen und Weiterbildungen sind Gegenstand der Unteransprüche.

Ein als Dichtbandrolle konfektioniertes Dichtband weist einen Schaumstoffträger auf, der sich in einer vorgegebenen Längenrichtung, einer zu der Längenrichtung senkrechten Breitenrichtung und einer Dickenrichtung erstreckt, wobei diese Dickenrichtung bevorzugt senkrecht zu der Längenrichtung und zu der Breitenrichtung ist, wobei der Träger eine erste durch die Längenrichtung und die Breitenrichtung gebildete Hauptfläche sowie eine zweite durch die Längenrichtung und die Breitenrichtung gebildete Hauptfläche aufweist, welche der ersten Hauptfläche gegenüberliegt und/oder von der ersten Hauptfläche beabstandet ist und wobei der Träger weiterhin eine erste durch die Längenrichtung und die Dickenrichtung gebildete Nebenfläche sowie eine zweite durch die Längenrichtung und die Dickenrichtung gebildete Nebenfläche aufweist wobei die zweite Nebenfläche der ersten Nebenfläche gegenüberliegt und/oder von der ersten Nebenfläche beabstandet ist.

Daher begrenzen die Hauptflächen den Schaumstoffträger jeweils in dessen Dickenrichtung und die Nebenflächen begrenzen den Schaumstoffträger in der Breitenrichtung.

Erfindungsgemäß ist wenigstens eine Nebenfläche mit einer Dichtmasse beschichtet und/oder wärmebehandelt. So wäre es beispielsweise möglich, dass diese Nebenfläche im Laufe eines Herstellungsverfahrens geschmolzen wurde, um so luftdicht zu werden.

Bei diesen Nebenflächen, die auch als Seitenfläche bezeichnet werden, handelt es sich bezüglich der Dichtbandrolle um deren jeweilige Außenflächen, das heißt diejenigen Flächen, welche eine Vielzahl von Lagen des Dichtbandes, die übereinander aufgerollt sind, aufweisen.

Es wäre auch möglich, dass auch die andere Nebenfläche mit einer Dichtmasse beschichtet ist und/oder dass auch die andere Nebenfläche wärmebehandelt ist.

Besonders bevorzugt handelt es sich bei der Dichtmasse um eine Masse, welche beispielsweise Silikon- oder Hybridklebstoff enthält.

Bevorzugt ist die Substanz bzw. die Klebemasse in Umfangsrichtung und/oder in radialer Richtung der Dichtbandrolle gleichmäßig eingebracht. Auf diese Weise wird später eine gleichmäßige Verteilung der Dichtschicht erreicht.

Daneben können auch Hotmelt Klebstoffe zum Einsatz kommen. Diese weisen dabei Polymere bzw. Basispolymere auf, die bevorzugt aus einer Gruppe von Basispolymeren ausgewählt sind, welche PA (Polyamid), PE (Polyethylen), APAO (amorphe Polyalphaolefine), EVAC (Ethylen-Vinylacetat-Copolymer) und TPE (Thermoplastische Copolyesterelastomere), TPU (Thermoplastische Elastomere auf Urethanbasis), TPA (Thermoplastische Polyamidelastomere) enthält. Daneben kann auch Wachs und insbesondere synthetisches Wachs Anwendung finden.

Besonders bevorzugt ist diese Dichtmasse elastisch bzw. weist eine gewisse Elastizität auf. Besonders bevorzugt ist jedoch die Elastizität dieser Dichtmasse geringer als die Elastizität des Schaumstoffträgers.

Es wäre jedoch auch möglich, eine nicht elastische Dichtmasse zu verwenden So könnte beispielsweise eine sehr steif aushärtende Masse verwendet werden, die sich nicht dehnt und welche nicht mit expandiert.

Besonders bevorzugt weist jedoch diese Dichtmasse eine Elastizität auf, die hoch genug ist, dass sie auch bei einer Expansion des Trägers und/oder des Dichtbandes nicht reißt. Auf diese Weise bleibt diejenige Oberfläche bzw. Nebenfläche, die mit der Dichtmasse versehen ist auch in einem rückgestellten Zustand des Schaumstoffträgers noch luftdicht.

Allerdings muss, wie erwähnt die Dichtmasse nicht elastisch sein, es sollte jedoch sichergestellt sein, dass die Dichtmasse nicht reißt oder Risse bildet.

Auf diese Weise wird für den Montagezustand des Dichtbandes eine abgedichtete Seitenfläche geschaffen.

Besonders bevorzugt ist diese Dichtmasse bzw. der verwendete Dichtstoff luftdicht oder im Wesentlichen luftdicht. Unter im Wesentlichen luftdicht wird verstanden, dass die Dichtmasse einen geringeren Luftdurchtritt ermöglicht als der Schaumstoffträger, an dem sie angeordnet ist. Damit erfüllt diese Dichtmasse in einem expandierten Zustand des Dichtbandes den Zweck, den Durchtritt von Luft auch durch den Schaumstoff zu verhindern.

Bevorzugt überdeckt die Dichtmasse in dem aufgerollten Zustand des Dichtbandes mehrere Lagen des Schaumstoffträgers und besonders bevorzugt sämtliche Lagen des Schaumstoffträgers. Bei einer weiteren vorteilhaften Ausführungsform ist diese Dichtmasse vollflächig auf die Nebenfläche aufgetragen und/oder in dem aufgerollten Zustand der Dichtbandrolle vollflächig auf einer Seitenfläche der Dichtbandrolle aufgetragen.

Bevorzugt weist die Dichtmasse in dem auf die Nebenfläche aufgetragenen Zustand eine derartige Elastizität und/oder Reißfestigkeit auf, dass sie bei einem Abrollen des Dichtbandes reißt.

Besonders bevorzugt ist das Dichtband auf einen Rollenkern aufgewickelt.

Bei einer weiteren bevorzugten Ausführungsform ist der Schaumstoffträger imprägniert. Insbesondere ist der Schaumstoffträger zur verzögerten Rückstellung imprägniert.

Bei einer bevorzugten Ausführungsform handelt es sich bei dem Schaumstoff um einen offenporigen Schaumstoff. Bei einer weiteren bevorzugten Ausführungsform handelt es sich bei dem Schaumstoff um einen Polyurethanschaumstoff.

Bevorzugt weist der Schaumstoffträger eine Dicke (gemessen an der Dickenrichtung) auf, die größer ist als 5 mm, bevorzugt größer als 10 mm und bevorzugt größer als 15 mm und besonders bevorzugt größer als 20 mm.

Bei einer weiteren bevorzugten Ausführungsform weist der Schaumstoffträger eine Dicke auf, die geringer ist als 100 mm, bevorzugt geringer als 80 mm, bevorzugt geringer als 70 mm, bevorzugt geringer als 60 mm, bevorzugt geringer als 50 mm, bevorzugt geringer als 40 mm und besonders bevorzugt geringer als 35 mm.

Erfindungsgemäß ist an wenigstens einer der Hauptflächen eine Abdeckschicht angeordnet. Dabei kann diese Abdeckschicht die Hauptfläche vollständig bedecken. Zusätzlich oder alternativ ist es möglich, dass wenigstens eine der Hauptflächen des Schaumstoffträgers wärmebehandelt ist, beispielsweise wie oben beschrieben teilweise geschmolzen ist, um auch so eine Luftdichtigkeit der Hauptfläche zu erreichen.

So wäre es beispielsweise denkbar, dass als Decklagenschaum ein thermoplastischer Schaum verwendet wird, oder wenn eine (oder beide) der Lagen mit Hotmeltfolie ausgestattet ist, die dann aufgeschmolzen und verstrichen werden kann.

Auch diese Abdeckschicht dient wie oben erwähnt dazu, den Durchtritt von Luft zu verhindern.

Erfindungsgemäß handelt es sich bei der Abdeckschicht um eine weitere Schaumstoffschicht und insbesondere eine Schaumstoffschicht, welche luftundurchlässig ist. Dabei kann diese weitere Schaumstoffschicht beispielsweise mittels einer Selbstklebeschicht an dem Schaumstoffträger angeordnet bzw. angeklebt sein. Es kann jedoch auch ein zusätzlicher Klebstoff vorhanden sein, mit dem die Abdeckschicht an den Schaumstoffträger angeklebt ist. Weiterhin wäre es möglich, dass die Abdeckschicht auf den Schaumstoffträger aufkaschiert ist. Auch wäre es möglich, dass die Abdeckschicht mittels eines Klebstoffes und insbesondere aber nicht ausschließlich eines Hotmelt - Klebstoffes an dem Schaumstoffträger befestigt ist.

Erfindungsgemäß weist die Abdeckschicht, die als Schaumstoffschicht ausgebildet ist, eine Dicke auf, die größer ist als 0,5 mm, bevorzugt größer als 1 mm, bevorzugt größer als 1,5 mm. Besonders bevorzugt weist diese Abdeckschicht eine Dicke auf, die geringer ist als 10 mm, bevorzugt geringer als 8 mm, bevorzugt geringer als mm.

Bei einer weiteren bevorzugten Ausführungsform ist die oben erwähnte Dichtmasse elastisch und insbesondere in der Dickenrichtung elastisch, wie oben erwähnt jedoch bevorzugt weniger elastisch als der Schaumstoffträger.

Bei einer weiteren bevorzugten Ausführungsform geht in einem expandierten Zustand des Dichtbandes die Dichtmasse an der Nebenfläche in die weitere Abdeckschicht über bzw. grenzt unmittelbar und insbesondere auch lückenfrei an diese an.

Bevorzugt ist die Dichtmasse in einem aufgerollten Zustand des Dichtbandes sowohl an den Nebenflächen des Schaumstoffträgers angeordnet und insbesondere angeklebt als auch an Seitenflächen der Abdeckschichten.

Bevorzugt weist auch wenigstens eine der Abdeckschichten und weisen bevorzugt beide Abdeckschichten jeweils zwei Hauptflächen auf, die sich in der Längenrichtung sowie der Breitenrichtung erstrecken sowie auch zwei Nebenflächen, die sich in der Längenrichtung sowie der Dickenrichtung erstrecken.

Bevorzugt ist die Dichtmasse auch an wenigstens einer Nebenfläche wenigstens einer Abdeckschicht und bevorzugt an jeweils wenigstens einer Nebenfläche beider Abdeckschichten angeordnet.

Allgemein könnten die Hauptflächen auch als Hauptoberflächen und die Nebenflächen auch als Nebenoberflächen bezeichnet werden.

Bei einer weiteren bevorzugten Ausführungsform ist auch an der anderen der beiden Hauptflächen eine Abdeckschicht angeordnet. Bei dieser Ausgestaltung ist daher der Schaumstoffträger zwischen den beiden Abdeckschichten angeordnet. Dabei ist es möglich, dass auch die zweite Abdeckschicht in der gleichen Weise ausgestaltet ist wie die erste Abdeckschicht und insbesondere auch als weitere Schaumstoffschicht ausgebildet sein kann.

Bevorzugt ist auch die zweite Abdeckschicht luftundurchlässig.

Bei einer weiteren bevorzugten Ausführungsform ist eine Haftkraft der Dichtmasse an dem Schaumstoffträger und/oder wenigstens einer der Abdeckschichten und insbesondere beiden Abdeckschichten größer als eine Reißkraft, die nötig ist, um die Dichtmasse zu zerreißen. Auf diese Weise kann bei einem Abrollen des Dichtbandes erreicht werden, dass die Dichtmasse jeweils in den Bereich zwischen zwei Lagen reißt und nicht etwa von einem oder dem anderen Schaumstoff abreißt.

Dabei wird für einen Vergleich der Reißkraft und der Haftkraft die gleiche Schichtdicke der Dichtmasse zugrunde gelegt.

Bei einer weiteren bevorzugten Ausführungsform ist eine Haftkraft der Dichtmasse an wenigstens einer und bevorzugt beiden Abdeckschichten größer als eine Haftkraft der Dichtmasse an dem Schaumstoffträger. Auf diese Weise kann erreicht werden, dass die Dichtmasse bei einem Expandieren des Schaumstoffträgers an den Abdeckschichten verbleibt.

Es wäre jedoch umgekehrt auch möglich, dass eine Haftkraft der Dichtmasse an dem Schaumstoffträger größer ist als eine Haftkraft der Dichtmasse an wenigstens einem und bevorzugt an beiden Abdeckschichten.

Bevorzugt ist der Schaumstoffträger in seiner Dickenrichtung zwischen den beiden Abdeckschichten angeordnet.

Bei einer weiteren bevorzugten Ausführungsform ist an wenigstens einer Abdeckschicht ein Klebeelement und insbesondere eine Selbstklebeschicht angeordnet. Es wäre jedoch möglich, dass an beiden Abdeckschichten eine Klebeschicht angeordnet ist. Auf diese Weise kann das Dichtband an einem Element eines Bauwerks wie etwa einem Fensterrahmen angeklebt werden.

Bei einer weiteren bevorzugten Ausführungsform ist es auch möglich, dass an der Abdeckschicht noch ein weiteres Abdeckmittel wie insbesondere ein sogenannter Liner angeordnet ist. Es wäre jedoch auch möglich, dass die Dichtbandrolle ohne Liner ausgeführt ist und insbesondere eine Klebeschicht der Abdeckschicht unmittelbar an einer weiteren Abdeckschicht anliegt.

Die vorliegende Erfindung bezieht sich weiterhin auf ein Verfahren zum Herstellen einer Dichtbandrolle gemäß Anspruch 9.

Dabei wird zunächst ein Schaumstoffträger zur Verfügung gestellt, der sich in einer Längenrichtung und einer hierzu senkrechten Breitenrichtung und einer zu der Längenrichtung und der Breitenrichtung senkrechten Dickenrichtung erstreckt. Dabei weist der Träger eine erste durch die Längenrichtung und die Breitenrichtung gebildete Hauptfläche sowie eine zweite durch die Längenrichtung und die Breitenrichtung gebildete Hauptfläche auf, welche der ersten Hauptfläche gegenüberliegt.

In einem weiteren Verfahrensschritt wird der Schaumstoffträger zu einer Großrolle aufgerollt und in einem weiteren Schritt werden von dieser Großrolle eine Vielzahl von Einzelrollen geschnitten. Dieses Schneiden erfolgt dabei bevorzugt in einer Richtung, die senkrecht zu einer Drehachse des Rollenträgers ist. Bevorzugt erfolgt das Schneiden in der Längenrichtung des Schaumstoffträgers.

In einem weiteren Verfahrensschritt wird wenigstens eine Seitenfläche der Einzelrollen mit einer Dichtmasse beschichtet. Zusätzlich oder alternativ ist es auch möglich, dass diese Seitenfläche wärmebehandelt, beispielsweise geschmolzen wird.

Dabei ist es möglich, dass diese Dichtmasse aufgestrichen wird, es wäre jedoch auch möglich, dass die Dichtmasse aufgesprüht wird. Dabei ist es möglich, dass die vollständige Seitenfläche der Dichtbandrolle mit der Dichtmasse beaufschlagt wird, es wäre jedoch auch möglich, dass diese Dichtmasse bahnweise auf die einzelnen Rollenlagen aufgebracht wird.

Erfindungsgemäß wird an wenigstens einer der Hauptflächen vor dem Aufrollen eine Abdeckschicht aufgebracht, wobei es sich bei der Abdeckschicht um eine Schaumstoffschicht handelt. Es erfolgt dieses Aufbringen der Abdeckschicht, bevor der Schaumstoffträger zu einer Großrolle aufgewickelt wird. Dies kann beispielsweise durch Ankleben dieser Abdeckschicht erfolgen. Bei einer bevorzugten Ausführungsform wird an beiden Hauptflächen des Schaumstoffträgers eine Abdeckschicht aufgebracht. Auf diese Weise entsteht insgesamt in einem expandierten Zustand des Dichtbandes eine U-förmige Einhüllung des Schaumstoffträgers durch ein luftdichtes Material. Bei einer bevorzugten Ausführungsform erfolgt beim Aufrollen des Dichtbandes oder davor ein Komprimieren des Schaumstoffträgers.

Bevorzugt ist der Schaumstoffträger sandwichartig zwischen die beiden Abdeckschichten eingebettet.

Bei einer weiteren bevorzugten Ausführungsform wird an wenigstens einer der Abdeckschichten noch ein Klebemittel, wie insbesondere aber nicht ausschließlich ein Selbstklebefilm angebracht.

Weitere Vorteile und Ausführungsformen ergeben sich aus den beigefügten Zeichnungen.

Darin zeigen:
- Fig. 1: Eine Schnittdarstellung einer erfindungsgemäßen Dichtbandrolle;
- Fig. 2: Eine Ansicht eines Dichtbandes in einem expandierten Zustand;
- Fig. 3: Eine Ansicht eines Dichtbandes in einer Bauwerksfuge;
- Fig. 4: Eine weitere Ansicht eines Dichtbandes in einem expandierten Zustand; und
- Fig. 5: Eine Ansicht des Dichtbandes aus Fig. 4 in einer Bauwerksfuge.

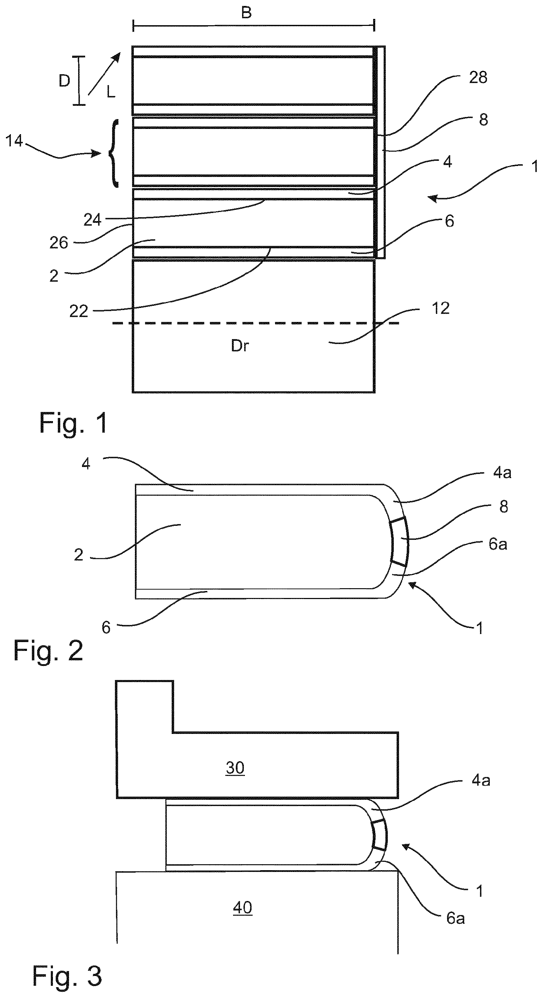

Figur 1 zeigt eine Dichtbandrolle 1 in einem aufgerollten Zustand, wobei hier drei Dichtbandlagen dargestellt sind, die übereinander angeordnet bzw. aufgerollt sind. Das Bezugszeichen 12 kennzeichnet einen Rollenkern, auf dem das Dichtband aufgerollt ist. Das Bezugszeichen Dr kennzeichnet eine Rollenachse der Dichtbandrolle 1. In den Figuren 2 und 3 bezeichnet das Bezugszeichen 1 das Dichtband jedoch nicht in einem als Rolle konfektionierten Zustand.

Jede Dichtbandlage 14 weist dabei einen Schaumstoffträger 2 auf, an dem eine erste Abdeckschicht 4 und eine zweite Abdeckschicht 6 angeordnet sind. Die Bezugszeichen 22 und 24 kennzeichnen Hauptflächen des Schaumstoffträgers 2, die sich in einer Breitenrichtung B und einer Längenrichtung L erstrecken. Diese Längenrichtung erstreckt sich hier senkrecht zur Figurenebene und verläuft insgesamt spiralförmig um den Rollenkern 12.

An einer Nebenfläche 28 ist hier ein Klebemittel bzw. eine Dichtmasse 8 angeordnet. Diese kann verfahrensmäßig auf diese Fläche aufgestrichen werden.

Beim Abziehen des Dichtbandes von der Dichtbandrolle wird die Dichtmasse 8 jeweils an den Sollstellen zwischen den einzelnen Lagen 14 reißen und verbleibt damit jeweils stückweise an den jeweiligen Nebenflächen 28 des Dichtbandes.

Figur 2 zeigt ein Dichtband in einem expandierten Zustand. Dabei ist wiederum der Schaumstoffträger 2 erkennbar sowie die beiden Abdeckschichten 4 und 6. Bei einer Rückstellung des Schaumstoffes bzw. in einem Expandieren wird sich auch die Dichtmasse 8 um ein gewisses Maß dehnen. Da die Dichtmasse 8 auch an den beiden Abdeckschichten 4 und 6 angeklebt ist, wird sie in einem expandierten Zustand in diese übergehen, sodass kein Spalt zwischen der Dichtmasse 8 und den Abdeckschichten 4 und 6 auftritt.

Figur 3 zeigt eine Anordnung eines erfindungsgemäßen Dichtbandes 1 in einer Bauwerksfuge zwischen zwei Gebäudeteilen 30 und 40, beispielsweise einem Mauerwerk und einer Fensterlaibung.

Man erkennt hier, dass Luft nicht von rechts nach links durch die Fuge dringen kann, da sie einerseits von der Dichtmasse 8 daran gehindert wird, andererseits jedoch auch von den Abschnitten 4a bzw. 6a der Abdeckschichten 4 und 6. Auf diese Weise kann ein Durchtreten von Luft durch die Bauwerksfuge bzw. durch das Dichtband verhindert werden.

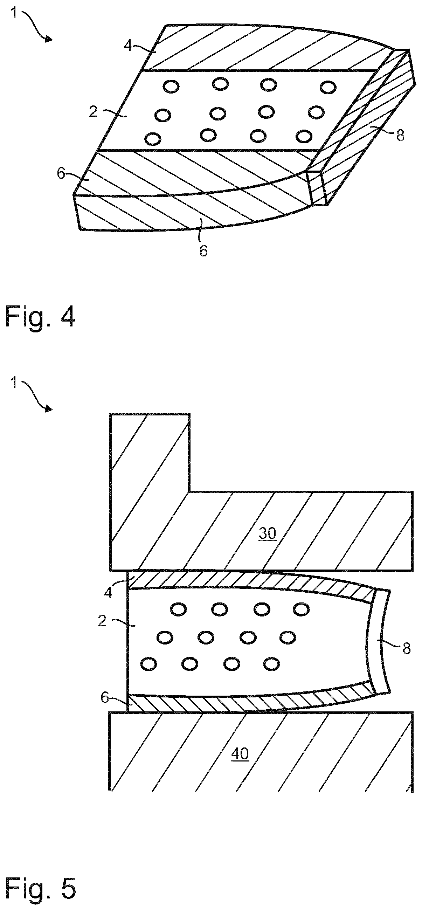

Fig. 4 zeigt ein Dichtband in einem expandierten Zustand in einer vorteilhaften Ausgestaltung. Dabei ist wiederum der Schaumstoffträger 2 erkennbar sowie die beiden Abdeckschichten 4 und 6. Bei einer Rückstellung des Schaumstoffes bzw. in einem Expandieren wird sich auch die Dichtmasse 8 um ein gewisses Maß dehnen, bleibt jedoch an den Abdeckschichten befestigt. Die Dichtmasse erstreckt sich hier entlang der gesamten Höhe des Schaumstoffträgers, wobei auch hier kein Spalt zwischen der Dichtmasse 8 und den Abdeckschichten 4 und 6 auftritt.

Figur 5 zeigt eine Anordnung eines erfindungsgemäßen Dichtbandes 1 aus Fig. 4in einer Bauwerksfuge zwischen zwei Gebäudeteilen 30 und 40, beispielsweise einem Mauerwerk und einer Fensterlaibung.

Man erkennt hier, dass Luft nicht von rechts nach links durch die Fuge dringen kann, da sie einerseits von der Dichtmasse 8 daran gehindert wird, andererseits jedoch auch von den Abdeckschichten 4 und 6. Auf diese Weise kann ein Durchtreten von Luft durch die Bauwerksfuge bzw. durch das Dichtband verhindert werden.

### Bezugszeichenliste

- 1: Dichtbandrolle
- 2: Schaumstoffträger
- 4: erste Abdeckschicht
- 4a: Abschnitt der Abdeckschicht
- 6: zweite Abdeckschicht
- 6a: Abschnitt der Abdeckschicht
- 8: Klebemittel bzw. Dichtmasse
- 12: Rollenkern
- 14: Dichtbandlagen
- 22: Hauptfläche des Schaumstoffträgers
- 24: Hauptfläche des Schaumstoffträgers
- 26, 28: Nebenfläche
- 30: Gebäudeteil
- 40: Gebäudeteil
- B: Breitenrichtung
- L: Längenrichtung
- Dr: Rollenachse

## Patentansprüche

1. Als Dichtbandrolle (1) konfektioniertes Dichtband mit einem Schaumstoffträger (2), der sich in einer vorgegebenen Längenrichtung (L), einer zu der Längenrichtung (L) senkrechten Breitenrichtung (B) und einer Dickenrichtung (D) erstreckt, wobei der Schaumstoffträger (2) eine erste durch die Längenrichtung (L) und die Breitenrichtung (B) gebildete Hauptfläche (22) sowie eine zweite durch die Längenrichtung (L) und die Breitenrichtung (B) gebildete Hauptfläche (24) aufweist, welche der ersten Hauptfläche gegenüberliegt und wobei der Schaumstoffträger (2) weiterhin eine erste durch die Längenrichtung (L) und die Dickenrichtung (D) gebildete Nebenfläche (26) sowie eine zweite durch die Längenrichtung (L) und die Dickenrichtung (D) gebildete Nebenfläche (28) aufweist,
wobei wenigstens eine Nebenfläche (26, 28) mit einer Dichtmasse (8) beschichtet ist und/oder wenigstens eine Nebenfläche (26, 28) wärmebehandelt ist und an wenigstens einer der beiden Hauptflächen (22, 24) eine Abdeckschicht (4,6) angeordnet ist,
**dadurch gekennzeichnet, dass**
es sich bei der Abdeckschicht um eine Schaumstoffschicht handelt, die eine Dicke aufweist, die größer ist als 0,5 mm.

2. Dichtband nach Anspruch 1,
**dadurch gekennzeichnet, dass**
der Schaumstoffträger (2) imprägniert ist.

3. Dichtband nach wenigstens einem der vorangegangenen Ansprüche,
**dadurch gekennzeichnet, dass**
die weitere Schaumstoffschicht luftundurchlässig ist.

4. Dichtband nach wenigstens einem der vorangegangenen Ansprüche,
**dadurch gekennzeichnet, dass**
der Schaumstoffträger (2) eine Dicke aufweist, die größer ist als 10 mm, bevorzugt größer als 15 mm und besonders bevorzugt größer als 20 mm und/oder dass der Schaumstoffträger (2) eine Dicke aufweist, die geringer ist als 100 mm, bevorzugt geringer ist als 50 mm, bevorzugt geringer als 40 mm und besonders bevorzugt geringer als 35 mm.

5. Dichtband nach Anspruch 3,
**dadurch gekennzeichnet, dass**
auch an der anderen der beiden Hauptflächen (24, 22) eine Abdeckschicht (4,6) angeordnet ist.

6. Dichtband nach wenigstens einem der vorangegangenen Ansprüche 4 - 5,
**dadurch gekennzeichnet, dass**
wenigstens eine der beiden Abdeckschichten (4, 6) luftdicht ausgeführt ist.

7. Dichtband nach wenigstens einem der vorangegangenen Ansprüche 4 - 5,
**dadurch gekennzeichnet, dass**
die Abdeckschicht (4, 6) eine Dicke aufweist, die größer ist als 1 mm und/oder die Abdeckschicht (4, 6) eine Dicke aufweist, die geringer ist als 10 mm, bevorzugt geringer als 8 mm, bevorzugt geringer als 6 mm.

8. Dichtband nach wenigstens einem der vorangegangenen Ansprüche,
**dadurch gekennzeichnet, dass**
auch die zweite Abdeckschicht in der gleichen Weise ausgestaltet ist wie die erste Abdeckschicht und insbesondere auch als weitere Schaumstoffschicht ausgebildet ist.

9. Verfahren zum Herstellen einer Dichtbandrolle mit den Schritten:
- Zur Verfügung Stellung eines Schaumstoffträgers (2), der sich in einer Längenrichtung (L) einer hierzu senkrechten Breitenrichtung (B) und einer zu der Längenrichtung (L) und der Breitenrichtung (B) senkrechten Dickenrichtung (D) erstreckt wobei der Schaumstoffträger Träger eine erste durch die Längenrichtung (L) und die Breitenrichtung (B) gebildete Hauptfläche (22) sowie eine zweite durch die Längenrichtung (L) und die Breitenrichtung (B) gebildete Hauptfläche (24) aufweist, welche der ersten Hauptfläche (22) gegenüberliegt, wobei an wenigstens einer Hauptfläche (22, 24) vor dem Aufrollen eine Abdeckschicht aufgebracht wird, wobei es sich bei der Abdeckschicht um eine Schaumstoffschicht handelt;
- Aufrollen des Schaumstoffträgers (2) auf einer Großrolle
- Schneiden der Großrolle in eine Vielzahl von Einzelrollen (1)
- Beschichten wenigstens einer Seitenfläche der Einzelrollen mit einer Dichtmasse und/oder Wärmebehandlung wenigstens einer dieser Seitenflächen.

10. Verfahren nach Anspruch 9,
**dadurch gekennzeichnet, dass**
auch an der anderen der beiden Hauptflächen (24, 22) eine Abdeckschicht (4,6) angeordnet wird.

## Claims

1. A sealing tape (1) assembled as a roll, comprising a foam carrier (2) that extends in a predetermined longitudinal direction (L), a transverse direction (B) perpendicular to the longitudinal direction (L), and a thickness direction (D), wherein the foam carrier (2) has a first main surface (22) defined by the longitudinal direction (L) and the transverse direction (B), as well as a second main surface (24) defined by the longitudinal direction (L) and the transverse direction (B), which is opposite the first main surface, and wherein the foam carrier (2) further comprises a first secondary surface (26) defined by the longitudinal direction (L) and the thickness direction (D), as well as a second secondary surface (28) defined by the lengthwise direction (L) and the thickness direction (D),
wherein
at least one secondary surface (26, 28) is coated with a sealing compound (8) and/or at least one secondary surface (26, 28) is heat-treated, and a covering layer (4, 6) is arranged on at least one of the two main surfaces (22, 24),
**characterized in that**
the covering layer is a foam layer having a thickness greater than 0.5 mm.

2. The sealing tape according to claim 1,
**characterized in that**
the foam carrier (2) is impregnated.

3. The sealing tape according to at least one of the preceding claims,
**characterized in that**
the additional foam layer is air-impermeable.

4. The sealing tape according to at least one of the preceding claims,
**characterized in that**
the foam carrier (2) has a thickness greater than 10 mm, preferably greater than 15 mm, and particularly preferably greater than 20 mm, and/or that the foam carrier (2) has a thickness less than 100 mm, preferably less than 50 mm, preferably less than 40 mm, and particularly preferably less than 35 mm.

5. The sealing tape according to claim 3,
**characterized in that**
a covering layer (4, 6) is also arranged on the other of the two main surfaces (24, 22).

6. The sealing tape according to at least one of the preceding claims 4-5,
**characterized in that**
at least one of the two covering layers (4, 6) is airtight.

7. The sealing tape according to at least one of the preceding claims 4-5,
**characterized in that**
the covering layer (4, 6) has a thickness greater than 1 mm and/or the covering layer (4, 6) has a thickness less than 10 mm, preferably less than 8 mm, and preferably less than 6 mm.

8. The sealing tape according to at least one of the preceding claims,
**characterized in that**
the second covering layer is also configured in the same manner as the first covering layer and, in particular, is also formed as a further foam layer.

9. A method for manufacturing a roll of sealing tape, comprising the steps of:
- providing a foam carrier (2), which extends in a longitudinal direction (L), a transverse direction (B) perpendicular thereto, and a thickness direction (D) perpendicular to both the longitudinal direction (L) and the transverse direction (B), wherein the foam carrier has a first main surface (22) formed by the longitudinal direction (L) and the transverse direction (B), as well as a second main surface (24) formed by the longitudinal direction (L) and the transverse direction (B), which is opposite the first main surface (22), wherein a covering layer is applied to at least one main surface (22, 24) prior to rolling, and wherein the covering layer is a foam layer;
- Rolling up the foam carrier (2) onto a large roll
- Cutting the large roll into a plurality of individual rolls (1)
- Coating at least one side surface of the individual rolls with a sealing compound and/or heat-treating at least one of these side surfaces.

10. The method according to claim 9,
**characterized in that**
a covering layer (4, 6) is also applied to the other of the two main surfaces (24, 22).

## Revendications

1. Bande d'étanchéité confectionnée comme un rouleau de bande d'étanchéité (1) avec un support en mousse (2), qui s'étend dans une direction longitudinale (L) prédéfinie, une direction de largeur (B) perpendiculaire à la direction longitudinale (L) et une direction d'épaisseur (D), dans laquelle le support en mousse (2) présente une première surface principale (22) formée par la direction longitudinale (L) et la direction de largeur (B) ainsi qu'une deuxième surface principale (24) formée par la direction longitudinale (L) et la direction de largeur (B), qui est opposée à la première surface principale et dans laquelle le support en mousse (2) présente par ailleurs une première surface secondaire (26) formée par la direction longitudinale (L) et la direction d'épaisseur (D) ainsi qu'une deuxième surface secondaire (28) formée par la direction longitudinale (L) et la direction d'épaisseur (D), dans laquelle au moins une surface secondaire (26, 28) est revêtue d'une masse d'étanchéité (8) et/ou au moins une surface secondaire (26, 28) est traitée thermiquement et une couche de recouvrement (4, 6) est disposée sur au moins une des deux surfaces principales (22, 24),
**caractérisée en ce que**
la couche de recouvrement est une couche de mousse dont l'épaisseur est supérieure à 0,5 mm.

2. Bande d'étanchéité selon la revendication 1,
**caractérisée en ce que**
le support en mousse (2) est imprégné.

3. Bande d'étanchéité selon au moins l'une quelconque des revendications précédentes,
**caractérisée en ce que**
l'autre couche de mousse est imperméable à l'air.

4. Bande d'étanchéité selon au moins l'une quelconque des revendications précédentes,
**caractérisée en ce que**
le support en mousse (2) présente une épaisseur qui est supérieure à 10 mm, de manière préférée est supérieure à 15 mm et de manière particulièrement préférée est supérieure à 20 mm et/ou que le support en mousse (2) présente une épaisseur qui est inférieure à 100 mm, de manière préférée est inférieure à 50 mm, de manière préférée est inférieure à 40 mm et de manière particulièrement préférée est inférieure à 35 mm.

5. Bande d'étanchéité selon la revendication 3,
**caractérisée en ce que**
une couche de recouvrement (4, 6) est également disposée sur l'autre des deux surfaces principales (24, 22).

6. Bande d'étanchéité selon au moins l'une quelconque des revendications précédentes 4 - 5,
**caractérisée en ce que**
au moins une des deux couches de recouvrement (4, 6) est réalisée de manière étanche à l'air.

7. Bande d'étanchéité selon au moins l'une quelconque des revendications précédentes 4 - 5,
**caractérisée en ce que**
la couche de recouvrement (4, 6) présente une épaisseur qui est supérieure à 1 mm et/ou la couche de recouvrement (4, 6) présente une épaisseur qui est inférieure à 10 mm, de manière préférée est inférieure à 8 mm, de manière préférée est inférieure à 6 mm.

8. Bande d'étanchéité selon au moins l'une quelconque des revendications précédentes,
**caractérisée en ce que**
la deuxième couche de recouvrement est également configurée de la même manière que la première couche de recouvrement et en particulier est réalisée comme une couche de mousse supplémentaire.

9. Procédé de fabrication d'un rouleau de bande d'étanchéité avec les étapes :
- mise à disposition d'un support en mousse (2), qui s'étend dans une direction longitudinale (L) d'une direction de largeur (B) perpendiculaire à celle-ci et d'une direction d'épaisseur (D) perpendiculaire à la direction longitudinale (L) et à la direction de largeur (B), dans lequel le support en mousse présente une première surface principale (22) formée par la direction longitudinale (L) et la direction de largeur (B) ainsi qu'une deuxième surface principale (24) formée par la direction longitudinale (L) et la direction de largeur (B), qui est opposée à la première surface principale (22), dans lequel une couche de recouvrement est appliquée sur au moins une surface principale (22, 24) avant l'enroulement, dans lequel la couche de recouvrement est une couche de mousse ;
- enroulement du support en mousse (2) sur un rouleau de grande taille
- découpe du rouleau de grande taille en une pluralité de rouleaux individuels (1)
- revêtement d'au moins une surface latérale des rouleaux individuels avec une masse d'étanchéité et/ou traitement thermique d'au moins une desdites surfaces latérales.

10. Procédé selon la revendication 9,
**caractérisé en ce que**
une couche de recouvrement (4, 6) est également disposée sur l'autre des deux surfaces principales (24, 22).
